(19) Europäisches Patentamt / European Patent Office / Office européen des brevets

(11) **EP 3 502 665 A1**

(12) **EUROPEAN PATENT APPLICATION**

(43) Date of publication:
26.06.2019 Bulletin 2019/26

(51) Int Cl.:
*G01N 21/45* (2006.01)   *G01N 21/552* (2014.01)

(21) Application number: 17306916.2

(22) Date of filing: 22.12.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicants:
• **Université d'Aix Marseille
13007 Marseille 7 (FR)**
• **CENTRE NATIONAL DE LA RECHERCHE
SCIENTIFIQUE
75016 Paris (FR)**
• **Ecole Centrale De Marseille (ECM)
13013 Marseille (FR)**

(72) Inventors:
• **MAIRE, Guillaume
13001 Marseille (FR)**
• **SENTENAC, Anne
13005 Marseille (FR)**
• **GIOVANNINI, Hugues
13190 ALLAUCH (FR)**
• **CHAUMET, Patrick
13190 ALLAUCH (FR)**
• **BELKEBIR, Kamal
13004 Marseille (FR)**

(74) Representative: **Osha Liang
2, rue de la Paix
75002 Paris (FR)**

(54) **DEVICES AND METHODS FOR TOTAL INTERNAL REFLECTION (TIR) MICROSCOPY**

(57)   According to a first aspect, the present description relates to a device for TIR microscopy of a sample (S) comprising a support (210) for receiving the sample ; an illumination path comprising a spatially coherent light source (220) and a microscope objective (230), wherein said illumination path is configured to form at least a first illumination beam ($I_1$) for illuminating an interface (211) between said support and the sample, said first illumination beam having a first azimuth angle ($\phi_1$) and a first polar angle ($\theta_1$) adapted for total internal reflection at said interface, thus forming a first evanescent electromagnetic field ($E_{E1}$) in the sample ; at least a first detection path comprising said microscope objective and a first bidimensional optical acquisition device (240), wherein said first detection path is configured for the acquisition of at least a first interferogram ($N_1$) resulting from the optical interference between at least a first reference electromagnetic field ($E_{R1}$) and at least a first backscattered signal electromagnetic field ($E_{S1}$), wherein said first reference electromagnetic field ($E_{R1}$) results from the total internal reflection of said first illumination beam at said interface and said first backscattered signal electromagnetic field ($E_{S1}$) results from the backscattering by the sample of said first evanescent electromagnetic field ($E_{E1}$); and a computing device (250) configured to compute from said at least first interferogram at least one a map of a physical parameter related to the sample.

FIG.2A

EP 3 502 665 A1

**Description**

TECHNICAL FIELD

The present description relates to devices and methods for total internal reflection microscopy, and applies in particular to label-free optical imaging of samples.

PRIOR ART

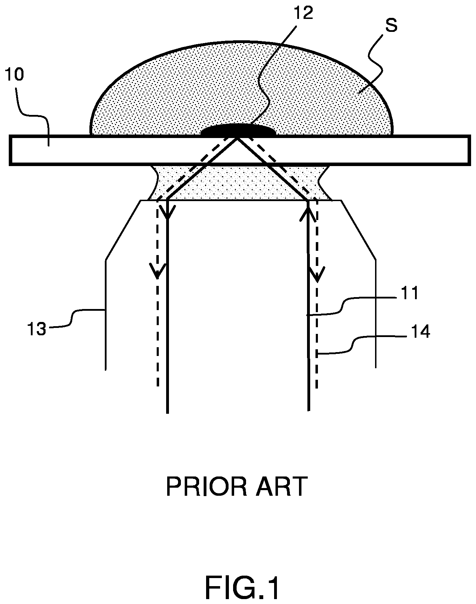

Total internal reflection fluorescence (TIRF) microscopy is a reference technique to study the membrane dynamics and organization in biological cells (*See* for example D. Axelrod et al., "Cell-substrate contacts illuminated by total internal reflection fluorescence", The Journal of cell biololgy 89, 141 (1981)). Its main advantage is the ability to illuminate the sample over a thin slice of about 100 nm, by taking benefit from a total internal reflection (TIR) configuration.
As shown in FIG.1, a sample S is deposited on a cover slip 10, for example a glass substrate, and by illuminating through the substrate above the critical angle (illumination beam 11), an evanescent wave 12 is created at the interface to locally probe the sample. In the example shown in FIG. 1, a high numerical aperture immersion objective 13 is used, to both illuminate above the critical angle and collect the fluorescence signal 14. Compared to standard wide field fluorescence microscopy, images with highly improved contrast are provided, since the background signal stemming from the volume of the sample can be suppressed.
Using fluorophores as contrast agents however presents some drawbacks, as their addition is invasive and induces the increased risk of photo bleaching and photo toxicity to the cell. Long-term studies are therefore difficult to achieve. In addition, the specificity of labeling prevents the visualization of the whole sample; it is therefore at the same time the main advantage and the main limitation of fluorescence imaging. As a result, there is a need for a high resolution technique able to probe cell membranes without the constraint of incorporating a fluorescent label.
Two main approaches have been used so far to perform label-free imaging in total internal reflection (TIR) microscopy with a high numerical aperture objective.
A first approach is described for example in P. Bon et al. ("Label-free evanescent microscopy for membrane nano-tomography in living cells", Journal of Biophotonics 7, 857 (2014)). This technique uses a spatially incoherent source (such as a light bulb or LED) to illuminate the sample simultaneously with all angles above the critical value imposed by the glass substrate and the sample immersion medium (usually water). As the sample refractive index is higher than that of water, total internal reflection is frustrated at locations where the sample is close to the interface, which modulates the reflected intensity. This modulation of the reflection is the source of contrast in the resulting image. This method is also known as "frustrated" total internal reflection or fTIR. Although this method presents a good sensitivity, the spatial resolution is limited to the Rayleigh criterion ($0.6\,\lambda_m$/NA, where $\lambda_m$ is the average wavelength of illumination and NA the numerical aperture of the objective), and the method amounts to considering the sample as a succession of planar diopters placed at different heights. This method is thus preferably adopted for samples having soft and progressive profiles of height.
The second approach uses a laser beam focused in the back focal plane (BFP) of the objective at the edge of the numerical aperture (*See* for example F. Jünger et al., "Fast, label-free super-resolution live-cell imaging using rotating coherent scattering (ROCS) microscopy", Scientific reports 6, 30393). The focused beam is scanned along a circle in the BFP, so that the sample is illuminated in TIR by a rotating collimated beam, and the integration time of the camera is set to match the rotation period of the beam. The totally reflected beam is blocked in a plane conjugated with the BFP to detect only the scattered intensity and obtain dark field imaging. Although this method claims a good spatial resolution (slightly better than the Rayleigh criterion), it is principally used for qualitative measurements as it is known to slightly distort the image compared to the object.
The present invention proposes a new method for total internal reflection microscopy, which can provide with a simple arrangement the phase of the signal backscattered by the sample and further improves the imaging spatial resolution compared to the previous approaches.

SUMMARY

According to a first aspect, the present description relates to a device for TIR microscopy of a sample comprising:

- a support for receiving the sample;
- an illumination path of the sample comprising a spatially coherent light source and a microscope objective, wherein said illumination path is configured to form at least a first illumination beam for illuminating an interface between said support and the sample, said first illumination beam having a first azimuth angle and a first polar angle adapted for total internal reflection at said interface, thus forming a first evanescent electromagnetic field in the sample;

- at least a first detection path comprising said microscope objective and a first bidimensional optical acquisition device, wherein said first detection path is configured for the acquisition of at least a first interferogram resulting from the optical interference between at least a first reference electromagnetic field and at least a first backscattered signal electromagnetic field, wherein said first reference electromagnetic field results from the total internal reflection of said first illumination beam at said interface and said first backscattered signal electromagnetic field results from the backscattering by the sample of said first evanescent electromagnetic field; and
- a computing device configured to compute from said at least first interferogram at least one map of a physical parameter related to the sample.

The device for TIR microscopy as described above enables a label-free TIR microscopy technique, which keeps the same set-up simplicity as the previous approaches for TIR microscopy but also permits to perform phase imaging. By detecting the interference between the backscattered field and the total internal reflection, an off-axis holography scheme is provided but without the need of any external reference wave.

According to one or further embodiments, said at least one map (or "image") of a physical parameter related to the sample comprises at least one of: a 2D map of the phase and/or modulus of said first backscattered signal electromagnetic field, a 2D map of the real part and/or imaginary part and/or modulus and/or phase of an equivalent reflectivity $r_{eq}$ of the sample, a 3D map of the real and/or imaginary parts of a permittivity contrast $\Delta\varepsilon$ of the sample. The permittivity contrast $\Delta\varepsilon$ may be defined as the difference between the relative dielectric permittivity of the object (the square of the refractive index) and that of the background.

According to one or further embodiments, said illumination path further comprises scanning means for controlling said azimuth angle and/or said polar angle of at least said first illumination beam. For example, the scanning means comprise at least a first axis of rotation situated in a plane optically conjugated with said interface between the sample and the support.

According to one or further embodiments, the scanning means are configured to form a temporal sequence of illumination beams, including said first illumination beam, and having different azimuth and/or polar angles adapted for total internal reflection at said interface, each illumination beam thus forming an evanescent electromagnetic field in the sample; the first detection path is configured for the acquisition of a plurality of interferograms, each interferogram resulting from the optical interference between at least one reference electromagnetic field and at least one backscattered signal electromagnetic field, wherein said reference electromagnetic field results from the total internal reflection of one of said illumination beams at said interface and said backscattered signal electromagnetic field results from the scattering by the sample of said evanescent electromagnetic field formed by said illumination beam; the computing device is configured to compute said at least one map of a physical parameter related to the sample from said plurality of interferograms.

By using several illumination angles, for example having the same polar angle but different azimuth angles, it is possible to perform a synthetic aperture reconstruction of the sample, the improving the resolution by a factor of 2 compared to classical microscopy techniques plagued by the Rayleigh criterion.

In the present description, the resolution is defined by the smallest distance between two points of the object that can be distinguished through the microscope objective.

According to one or further embodiments, the device for TIR microscopy further comprises a second detection path, wherein said second detection path comprises said microscope objective, a second bidimensional optical acquisition device for acquisition of a fluorescence signal resulting from the fluorescence of said sample and a beam splitter configured to direct said fluorescence signal to said second bidimensional optical acquisition device.

According to one or further embodiments, said illumination path further comprises a beam shaper element adapted to form simultaneously said first illumination beam and a second illumination beam, wherein the first and second illumination beams have the same polar angle and two azimuth angles spaced by 180°.

According to one or further embodiments, said first acquisition path further comprises a spatial filter for blocking one of the first and second reflections beams, resulting respectively from the total internal reflection of said first and second illumination beams at said interface between the sample and the support.

According to a second aspect, the present description relates to a method for TIR microscopy of a sample comprising the steps of:

- illuminating with at least a first illumination beam an interface between a support and the sample using an illumination path comprising a spatially coherent light source and a microscope objective, wherein said first illumination beam has a first polar angle adapted for total internal reflection at said interface and a first azimuth angle, thus forming a first evanescent electromagnetic field in the sample;
- detecting, using a first detection path comprising said microscope objective and a first bidimensional optical acquisition device, at least a first interferogram resulting from the optical interference between at least a first reference electromagnetic field and at least a first backscattered signal electromagnetic field, wherein said first reference electromagnetic field results from the total internal reflection of said first illumination beam at said interface and said first backscattered signal electromagnetic field results from the scattering by the sample of said first evanescent electromagnetic field; and

- computing, from at least said first interferogram, at least one a map of a physical parameter related to the sample.

According to one or further embodiments, the computing step comprises performing a numerical 2D Fourier transform of said at least first interferogram and filtering said 2D Fourier transform to retrieve the 2D Fourier transform of said first backscattered signal electromagnetic field. It is thus possible to retrieve a 2D map of the phase and/or modulus of said first backscattered signal electromagnetic field.

According to one or further embodiments, the illuminating step comprises sequentially illuminating said interface with a plurality of illumination beams, including said first illumination beam and having different azimuth angles and polar angles adapted for total internal reflection at said interface, each illumination beam thus forming an evanescent electromagnetic field in the sample; the detecting step comprises acquiring a plurality of interferograms, each interferogram resulting from the optical interference between at least one reference electromagnetic field and at least one backscattered signal electromagnetic field, wherein said reference electromagnetic field results from the total internal reflection of one of said illumination beams at said interface and said backscattered signal electromagnetic field results from the scattering by the sample of an evanescent electromagnetic field formed by said illumination beam in the sample; the computing step comprises computing, from said plurality of interferograms, at least one map of a physical parameter related to the sample.

It is thus possible to perform a synthetic aperture reconstruction of the sample, which typically improves the resolution by a factor of 2 compared to classical microscopy techniques plagued by the Rayleigh criterion.

Said at least one map of a physical parameter related to the sample may comprise at least one of: a 2D map of the phase and/or modulus of a backscattered signal electromagnetic field resulting from the scattering by the sample of the evanescent electromagnetic field formed by any of the illumination beams, a 2D map of an equivalent reflectivity $r_{eq}$ of the sample, a 3D map of permittivity contrast $\Delta\varepsilon$ of the sample. A 2D map of an equivalent reflectivity $r_{eq}$ of the sample, or a 3D map of permittivity contrast $\Delta\varepsilon$ of the sample may be retrieved from one or a plurality of said 2D maps of backscattered signal electromagnetic fields, or directly from one or a plurality of said interferograms.

According to one or further embodiments, the computing step comprises performing a summation of said plurality of interferograms. It is thus possible to directly retrieve a 2D map of the real part of an equivalent reflectivity $r_{eq}$ of the sample.

According to one or further embodiments, the computing step comprises:

- performing a numerical 2D Fourier transform of each interferogram;
- filtering said 2D Fourier transform to retrieve the 2D Fourier transform of the backscattered signal electromagnetic field for each illumination angle;
- summing said 2D Fourier transforms of the backscattered signal electromagnetic fields for all illumination angles;
- performing an inverse 2D Fourier transform of said sum to obtain a 2D map of the phase and/or modulus of an equivalent reflectivity of the sample.

According to one or further embodiments, the computing step further comprises normalizing the 2D Fourier transform of the backscattered signal electromagnetic field for each illumination angle before summing, to correct from a phase and/or modulus mismatch between the different backscattered signal electromagnetic fields in the Fourier domain.

According to one or further embodiments, the method for TIR microscopy further comprises acquiring using a second detection path, a fluorescence signal resulting from the fluorescence of the sample.

It is thus possible to get simultaneously TIR fluorescence microscopy and TIR microscopy according to the present description.

According to one or further embodiments, the illuminating step comprises simultaneously illuminating said interface with said first illumination beam and a second illumination beam, wherein the first and second illumination beams have the same polar angle and two azimuth angles spaced by 180°.

According to one or further embodiments, the detecting step further comprises blocking one of the first and second reflections beams, resulting respectively from the total internal reflection of said first and second illumination beams at said interface between the sample and the support.

BRIEF DESCRIPTION OF THE DRAWINGS

Other advantages and features of the object of the description will become apparent upon reading of the description, illustrated by the following figures:

- FIG. 1 (already described), a scheme for TIRF microscopy, according to the prior art;

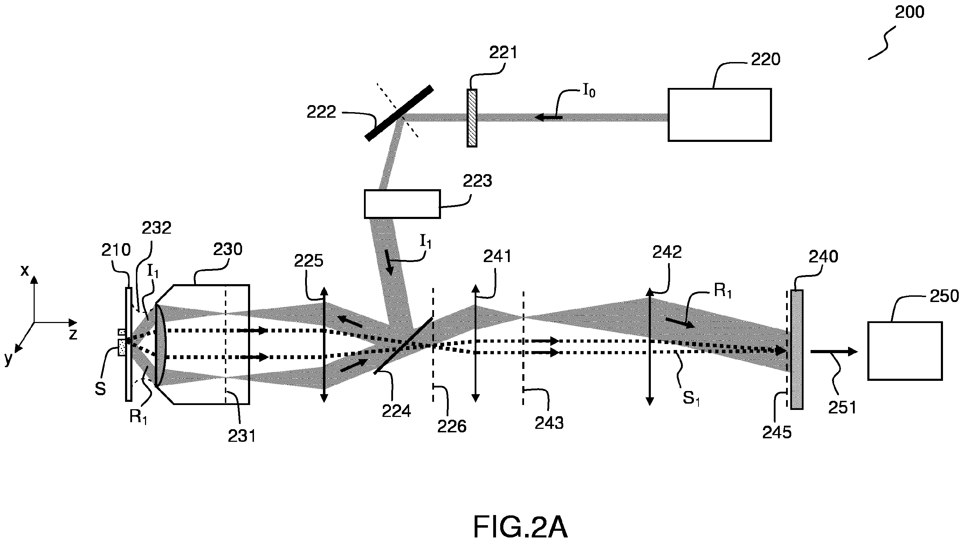

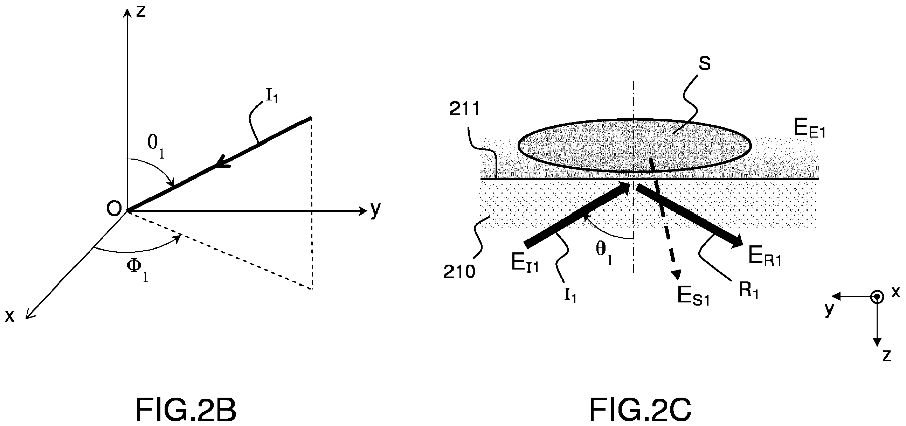

- FIG. 2A, a scheme of a device for total internal reflection (TIR) microscopy, according to an embodiment of the present description; FIG. 2B, a scheme of an illumination beam impinging the interface between the sample and the substrate; and FIG. 2C, a detailed view of said interface, illustrating the different optical fields;

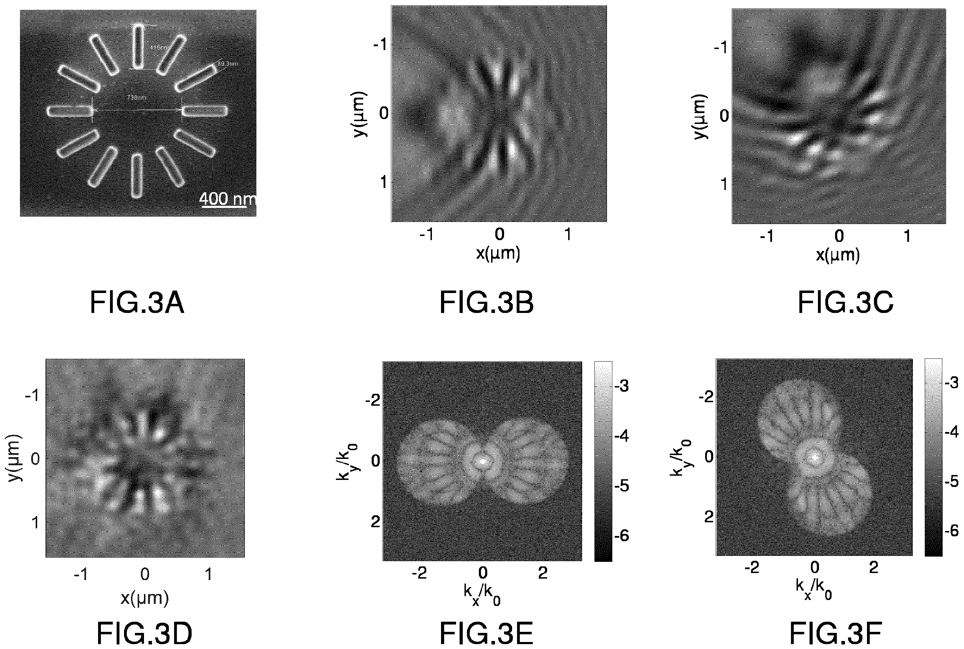

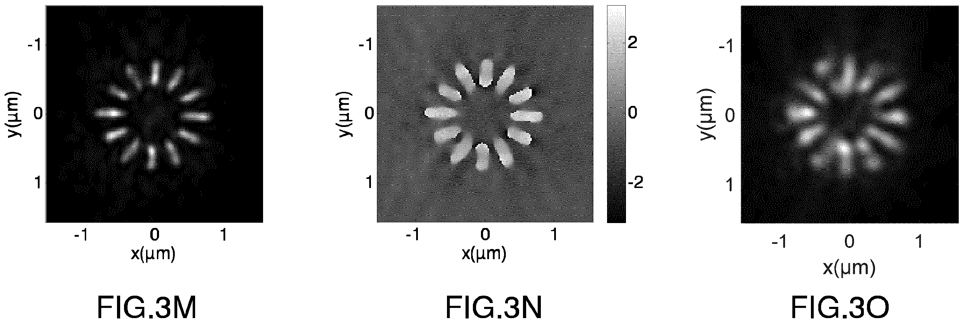

- FIG. 3A to 3O, experimental images illustrating an electron microscope image of a sample (FIG. 3A); different steps of a method for total internal reflection microscopy according to an embodiment of the present description for determining the modulus and phase (real part/ complex part) of an equivalent reflectivity of such sample (FIGS. 3B to 3N); and for comparison, the dark field image obtained using a method of the prior art (FIG. 3O);

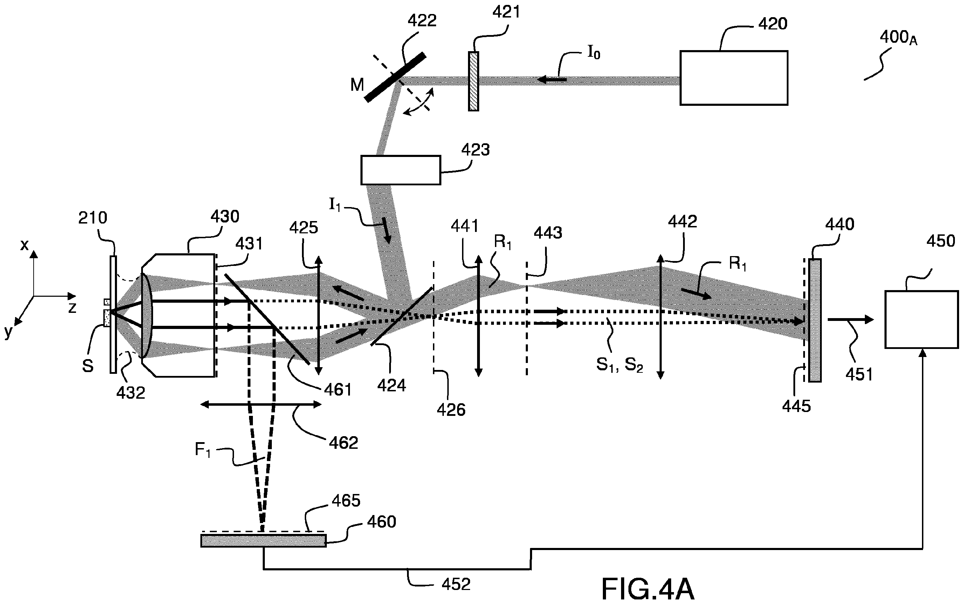

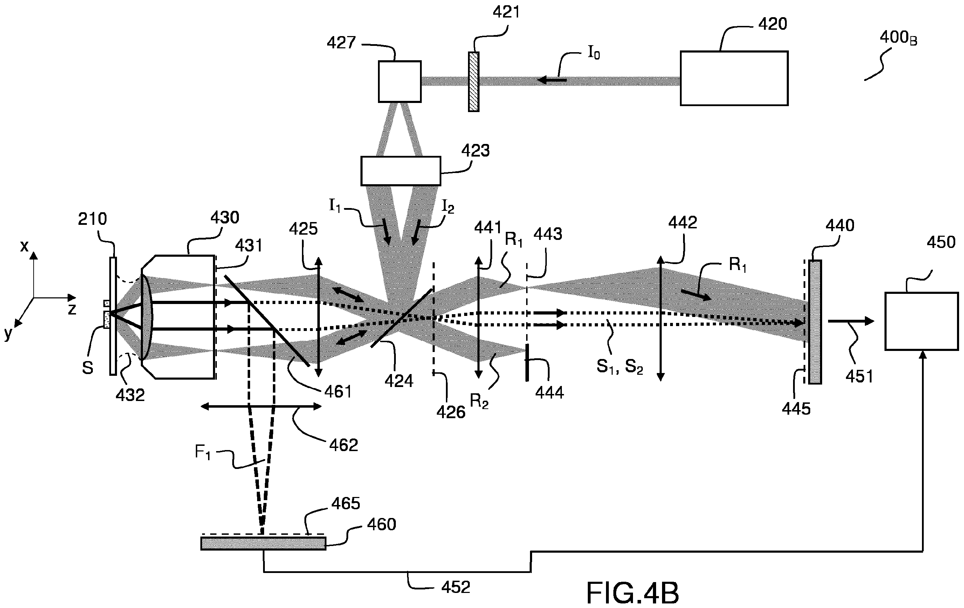

- FIG. 4A, a scheme of a device for total internal reflection microscopy, according to an embodiment of the present description, combined with TIR fluorescence microscopy and FIG. 4B, the same scheme of a device for TIR microscopy as the one shown in FIG. 4A, further implementing a structured illumination.

DETAILED DESCRIPTION

Specific embodiments of the present disclosure will now be described in detail with reference to the accompanying figures. In the following detailed description of embodiments of the present disclosure, numerous specific details are set forth in order to provide a more thorough understanding of embodiments of the present disclosure. However, it will be apparent to one of ordinary skill in the art that embodiments of the present disclosure may be practiced without these specific details. In other instances, well-known features have not been described in detail to avoid unnecessarily complicating the description.

Herein, the words "comprise/comprising" mean the same thing as "include/including," "contain/containing", are inclusive or open-ended and do not exclude additional, unrecited elements. Limit values of ranges using for example the words "from", "from...to", "below", "more than", "greater than", "less than", "lower than", and "at least" and the like are considered included in the ranges.

FIG. 2A is a schematic view of an exemplary architecture of a device 200 for TIR microscopy of a sample in an EPI configuration for detecting the total internal reflection. The device 200 includes a support 210 for receiving the sample. A detailed view of an interface 211 between the support and the sample is shown in FIG. 2C.

The support is for example made of glass, or any transparent medium which permits to generate total internal reflection at interface 211.

The sample may be any object in a surrounding medium (e.g. liquids or air), i.e.any micro or nanostructure having a refractive index is different from that of the medium. For example, the sample may be a biological sample in solution, or a micro or nanostructure directly deposited on the support, e.g. biochips. In general, a low refractive index difference between the object and the medium, e.g. $\Delta n < 0.5$, will provide a better performance of the measurements, as the field backscattered by the object will be weak compared to the total internal reflection.

The device 200 for TIR microscopy further includes an illumination path of the sample comprising a spatially coherent light source 220 and a microscope objective 230 with a back focal plane (BFP) 231, also referred to as the Fourier plane. The illumination path is configured to form at least a first illumination beam $I_1$ for illuminating the interface 211 between the support 210 and the sample S.

The spatial coherent source 220 is for example a laser source, a laser diode or any light source where light is sufficiently spatially filtered (through a pinhole, a monomode fiber...) so that each illumination angle through microscope objective 230 is defined with a typical angle variation in radians of $\lambda_m/(10D)$, where $\lambda_m$ is the average wavelength of the illumination beam and D is the maximal diameter of the sample.

In some embodiments, the beam $I_0$ emitted by the source 220 may be a linearly polarized laser beam, in which case the illumination path may further comprise a wave plate 221, for example a motorized wave plate, adapted to adjust the polarization direction of the laser beam $I_0$.

In the exemplary architecture of the device 200 shown in FIG. 2A, the illumination path further comprises scanning means 222 to control the polar angle and azimuth angle of the illumination beam and a beam expander 223 for generating a wide collimated beam. The illumination path further comprises a beam splitter 224 to direct the collimated beam towards the microscope objective 230 and a tube lens 225, whose front focal plane is superposed with the back focal plane 231 of the objective.

As shown in FIG. 2B, at least a first collimated illumination beam $I_1$ is thus generated at the exit of the microscope objective 230, wherein said illumination beam $I_1$ is impinging on the interface between the sample and the support (plane xOy in FIG. 2B) with a first azimuth angle $\phi_1$ and a first polar angle (or tilt angle) $\theta_1$. The polar angle $\theta_1$ is adapted for total internal reflection of the first illumination beam $I_1$ at the interface 211 between the support and the sample.

Scanning means 222 may comprise a rotary optic, for example a combination of galvanometric systems or a combination of MEMS mirrors (with one axis) or one MEMS mirror with two axes. In the case where two distinct mirrors are used to produce these two rotations, it is advantageous for the axes of rotation of these two mirrors to be optically conjugated. Advantageously, the axis (axes) of rotation of the angular scanning is (are) situated in optically conjugate plane(s) of said interface between the sample and the support. Thus, rotating the mirror(s) varies the illumination angle(s) without shifting laterally the illumination beam on the object.

The microscope objective 230 is for example an immersion objective, working with a liquid immersion medium 232 placed between the support 210 and the objective. The liquid immersion medium has the same refractive index as the one of the support 210 to obtain a single reflection at interface 211. For example, the liquid immersion medium is oil when the support 210 is a glass substrate.

As shown in FIG. 2C, the first illumination beam $I_1$, having an electromagnetic field $E_{I1}$, has a polar angle $\theta_1$ adapted for total internal reflection at the interface 211, thus forming a first evanescent electromagnetic field $E_{E1}$ in the sample. The total internal reflection of the first illumination beam at the interface 211 results in a first reflected beam $R_1$ having a first reference electromagnetic field $E_{R1}$. Further, an electromagnetic field $E_{S1}$, hereafter the first backscattered signal electromagnetic field, is generated; it results from the backscattering of the first evanescent electromagnetic field $E_{E1}$ by the sample S.

In the present description, the complex notation is assumed for all electromagnetic fields.

The exemplary architecture of the device 200 shown in FIG. 2A further includes a detection path comprising said microscope objective 230, a bidimensional optical acquisition device 240, and a computing device 250.

The bidimensional optical acquisition device 240 is for example a CCD, CMOS or sCMOS camera.

The detection path is configured for the acquisition by the acquisition device 240 of at least a first interferogram $N_1$ resulting from the optical interference between the first reference electromagnetic field $E_{R1}$ and the first backscattered signal electromagnetic field $E_{S1}$. As shown in FIG. 2A, the detection path further comprises the tube lens 225, having a front focal plane superposed with the back focal plane 231 of the objective and a back focal plane 226. The interface 211 is optically conjugated with the back focal plane 226 of the tube lens 225 when said interface 211 is placed on the front focal plane of the objective 230. A detection plane 245 of the optical acquisition device 240 is optically conjugated with said interface 211. Said detection plane can be placed for instance at said back focal plane 226 of the tube lens 225. Optionally, relay lenses 241 and 242 may be positioned to define a magnifier system. Such magnifier system can be added if a global magnification different from the one of the objective 230 is desired between the interface 211 and the acquisition device 240, or if it is useful to have access to an intermediate plane conjugated with the back focal plane 231 of the objective (where spatial filters can be placed for instance). Such intermediate plane can be the back focal plane 243 of lens 241, if its front focal plane is superposed with the back focal plane 226 of tube lens 225.

The computing device 250 for determining at least one map of a physical parameter related to the sample may be a computer, computer network, or other device that has a processor, memory, data storage, and other associated hardware such as an interface module, a display screen and a media drive for reading and writing a removable storage medium (not shown in FIG. 2A). The removable storage medium and/or data storage may contain instructions, which when executed by the computing device 250, cause the computing device 250 to perform one or more example methods described herein.

In the example system of FIG. 2A, the computing device 250 receives incoming data 251, such as one or a plurality of electronic signals resulting from the acquisition by the acquisition device 240 of said at least first interferogram. Processing of incoming data 251 by the computing device 250 may be made according to one or more example methods described herein.

In a first embodiment, a single interferogram may be used for retrieving the backscattered signal electromagnetic field $E_{S1}$.

Said first interferogram $N_1$ corresponds to the intensity of the optical signal detected by the acquisition device 240 and can be written:

$$N_1 = |E_{S1} + E_{R1}|^2 = |E_{S1}|^2 + |E_{R1}|^2 + E_{S1}E_{R1}{}^* + E_{S1}{}^*E_{R1} \qquad (1)$$

Where $E_{R1}{}^*$ represents the complexe conjugate of $E_{R1}$ and $E_{S1}{}^*$ represents the complexe conjugate of $E_{S1}$.

Since the sample S is illuminated by an evanescent wave over a very thin slice, typically a layer having a thickness of about 100 nm or less, and is usually of very weak contrast in biology, we can assume $E_{R1}$ is very strong compared to $E_{S1}$, and neglect $|E_{S1}|^2$ in Eq. (1). Since the reflective beam is close to the edge of the numerical aperture of the objective, it can then act as an off-axis reference wave for the backscattered signal, as in classical digital off-axis holography.

By performing the 2D numerical Fourier transform of $N_1$, the terms $E_{S1}E_{R1}{}^*$ and $E_{S1}{}^*E_{R1}$ can be separated from each other in the Fourier space, and it is then possible to filter $E_{S1}$ both in modulus and phase, from a simple measurement of an interferogram $N_1$.

Hence, the present invention is clearly different from the approach of P. Bon *et al.* described in the prior art section, which necessitates that total internal reflection does not take place in the presence of the sample. In the present invention, total internal reflection occurs in the presence of the sample to get the best performances, what supposes not to use the small illumination angles necessary in P. Bon *et al.*

With the device and method for TIR microscopy according to the present description, a simple measurement of an interferogram $N_1$ permits to obtain a 2D map of the phase and the modulus of the field $E_{S1}$ at the level of the sample; such a configuration is far more simple than classical techniques to measure the phase and the modulus of an optical backscattered signal, which necessitate for instance to add an external reference path or to use a wavefront sensor.

As in known techniques of off-axis holography, additional numerical treatments can be made, for example numerical treatments of the field in the Fourier space, as for instance propagating the field to adjust its focus plane, or convert the field to dark field or phase contrast modes.

According to one or a plurality of embodiments, several successive illuminations of the interface between the support and the sample are made, at different angles, thus generating a plurality of interferograms. For example, the azimuth angle is changed while keeping the same polar angle.

For example, the scanning means 222 shown in FIG. 2A are configured to form a plurality of $p$ successive illumination beams $I_i$, for example $p$ comprised between 4 and several hundreds For example, the $p$ illumination beams $I_i$ have the same polar angle but different azimuth angles.

Each illumination beam $I_i$ forms an evanescent electromagnetic field $E_{Ei}$ in the sample. The detection path is then configured for the acquisition of $p$ interferograms Ni, wherein each interferogram Ni results from the optical interference between at least one reference electromagnetic field $E_{Ri}$ and at least one backscattered signal electromagnetic field $E_{Si}$, wherein the reference electromagnetic field $E_{Ri}$ results from the total internal reflection of said illumination beam $I_i$ at said interface and said backscattered signal electromagnetic field $E_{Si}$ results from the scattering by the sample of said evanescent electromagnetic field $E_{Ei}$.

From the set of $p$ interferograms, different reconstruction techniques can be used to reconstruct a map of a physical parameter related to the sample, as for example a 2D map of the phase and/or modulus of the backscattered signal electromagnetic field for any of the illuminations, a 2D or 3D map of the permittivity contrast $\Delta\varepsilon$ or a 2D map of an equivalent reflectivity $r_{eq}$, as it will be described in further details below.

According to one or a plurality of examples, the reconstruction techniques comprise extracting $p$ backscattered fields $E_{Si}$ from the $p$ interferograms $N_i$, for example using a method as described above. Different other physical parameters (e.g. permittivity contrast $\Delta\varepsilon$ or equivalent reflectivity $r_{eq}$) may then be retrieved from said $p$ backscattered fields $E_{Si}$.

According to a first example, a 3D map of the permittivity contrast $\Delta\varepsilon$ may be retrieved with an inversion algorithm based on a 3D scattering model, as described for example in C. Godavarthi et al., JOSA A, Vol. 32, p. 287, 2015. Such an approach provides a very good resolution (better than $\lambda/4$), but at the cost of longer reconstruction procedures.

According to a further example, a 3D map of the permittivity contrast $\Delta\varepsilon$ may be retrieved using 3D models based on linear approximations, such as Born or Rytov approximations. For each illumination angle, Esi permits to access different spatial frequencies of $\Delta\varepsilon$, and combining information gathered with all angles permits to enlarge the accessible spatial frequency domain and obtain a super-resolved reconstruction of $\Delta\varepsilon$ (beyond the classical Rayleigh criterion). This is referred to as synthetic aperture microscopy, and described for example in Y. Cotte et al., Nature Photonics, Vol. 7, p. 113, 2013. In the case of the Born approximation, the field $E_{Si}(\mathbf{k}_{Si}, \mathbf{k}_{Ii})$ scattered along wave vector $\mathbf{k}_{Si}$ when the sample is illuminated by a plane wave of wave vector $\mathbf{k}_{Ii}$ is linked to $\Delta\varepsilon$ by:

$$E_{Si}(\mathbf{k}_{Si}, \mathbf{k}_{Ii}) \propto \Delta\widetilde{\varepsilon}\,(\mathbf{k}_{Si}\text{-}\mathbf{k}_{Ii}), \tag{2}$$

where $\Delta\widetilde{\varepsilon}$ is the 3D Fourier transform of $\Delta\varepsilon$.

According to a further example, a 2D model may be used to reconstruct an equivalent reflectivity $r_{eq}$ of the sample. Such equivalent reflectivity $r_{eq}$ may be derived from the signal backscattered fields $E_{Si}$. As for example in S. A. Alexandrov et al., Phys. Rev. Lett., Vol. 97, 168102, 2006, it can be defined as $E_{Si} = r_{eq}E_{Ii}$, and can be seen as an equivalent amplitude reflection coefficient of the sample.

Such reconstruction technique is a 2D synthetic aperture technique, where the scattered field $E_{Si}(\mathbf{k}_{Si}, \mathbf{k}_{Ii})$ is linked to $r_{eq}$ by :

$$E_{Si}(\mathbf{k}_{Si}, \mathbf{k}_{Ii}) \propto \rho_{eq}(\boldsymbol{\kappa}_{Si}\text{-}\boldsymbol{\kappa}_{Ii}), \tag{3}$$

where $\rho_{eq}$ is the 2D Fourier transform of $r_{eq}$, and $\boldsymbol{\kappa}_{Si}$ and $\boldsymbol{\kappa}_{Ii}$ are respectively the components of $\mathbf{k}_{Si}$ and $\mathbf{k}_{Ii}$ parallel to interface 211.

An example of such 2D reconstruction is detailed and illustrated in the section below, with reference to FIGS. 3A to 3O.

According to one or a plurality of examples, the reconstruction techniques comprise retrieving physical parameters (e.g. permittivity contrast $\Delta\varepsilon$ or equivalent reflectivity $r_{eq}$) directly from the $p$ interferograms $N_i$.

For example, the permittivity contrast $\Delta\varepsilon$ may be retrieved from the $p$ interferograms $N_i$ with an inversion algorithm based on a rigorous 3D scattering model, but this time, as in M. D'Urso et al., JOSA A, Vol. 25, p. 271, 2008. Compared to the case as described above where input data are the $p$ scattered fields $E_{Si}$, this approach generally leads to still longer reconstruction processes with less accurate resolutions.

According to another example, the $p$ interferograms $N_i$ may be directly summed, which will enable a reconstruction of the real part of the equivalent reflectivity $r_{eq}$ mentioned above. However in practice, as will be detailed in the next section, such simple reconstruction scheme may be corrupted by the aberrations of the objective. It can be considered to correct the impact of these aberrations on the signal by placing on the detection path a phase mask, created for example by a spatial light modulator (SLM), in a plane conjugated with the back focal plane of the objective (plane 231). If the aberrations of the objective have been measured in a preliminary step, it is then possible to generate a phase mask on the SLM which cancels aberrations before the signal reaches the camera.

In the section below, it is shown experimentally how the phase and/or the modulus of an equivalent reflectivity of the sample may be retrieved using the original architecture of the device according to the present description.

FIG. 3A shows an electron microscope image of a sample, formed in this example of resin rods deposited on a glass substrate. FIGS. 3B to 3N show different steps of an exemplary method according to the present description, for computing from a plurality of interferograms, the phase and/or the modulus of an equivalent reflectivity of the sample. FIG. 3O shows the dark field image obtained using a method of the prior art.

The set-up is the one shown in FIG. 2A. The light source 220 is a supercontinuum laser filtered at 475 nm with a spectral width of 6 nm thanks to a variable bandpass filter. The laser beam is linearly polarized and crosses a motorized half wave plate 221 to adjust the polarization direction. A fast steering mirror 222 permits to control the deflection of the beam, and a beam expander 223 generates a wide collimated beam. The center of the mirror is conjugated with the center of the sample through the beam expander, the tube lens 225 and the microscope objective 230. Thus, rotating the mirror varies the illumination angle without shifting laterally the beam on the object. TIR illumination of the sample and collection of the reflected intensity is performed through the microscope objective 230 (100x, NA = 1.49). The signal is imaged on a sCMOS camera after passing through relay lenses 241, 242 to obtain a global magnification of about 290. The half wave plate 221 is rotated so that the polarization of the illumination remains in TE configuration for each illumination angle.

As shown in FIG. 3A, the sample comprises 12 calibrated resin rods forming a star and deposited on a glass slide. The inner diameter of the star is 800 nm, and each of its twelve branches has a width of 90 nm and a length of 400 nm. Height of the sample is 160 nm.

The resin star was illuminated in TIR with six sequential illumination beams having a polar angle about 60°, and azimuth angles regularly spaced every 60°.

FIG 3B and 3C show two interferograms acquired by the camera for two azimuth angles of the illumination beam.

FIG. 3D shows the sum of all six interferograms for the six TIR illumination beams without any post-treatment. Both terms $E_{Si}E_{Ri}^*$ and $E_{Si}^*E_{Ri}$ in Eq. (1) are present and only the real part of $r_{eq}$ can be retrieved. However, this simple technique does not enable to correct from aberrations, thus providing a distorted map of the real part of the equivalent reflectivity $r_{eq}$ of the sample.

FIG. 3E and 3F show the 2D Fourier transform of the interferograms shown in FIGS 3B and 3C respectively, with clear separation of $E_{Si}$ and $E_{Si}^*$. As expected, $|E_{Si}|^2$ is too weak to be distinguished, and therefore the phase and modulus of $E_{Si}$ can be retrieved as in off-axis holography. Note that for the present sample the contrast between resin and air is far larger than for biological samples in water, therefore the condition $|E_{Si}| \ll |E_{Ri}|$ will be still more valid in this case.

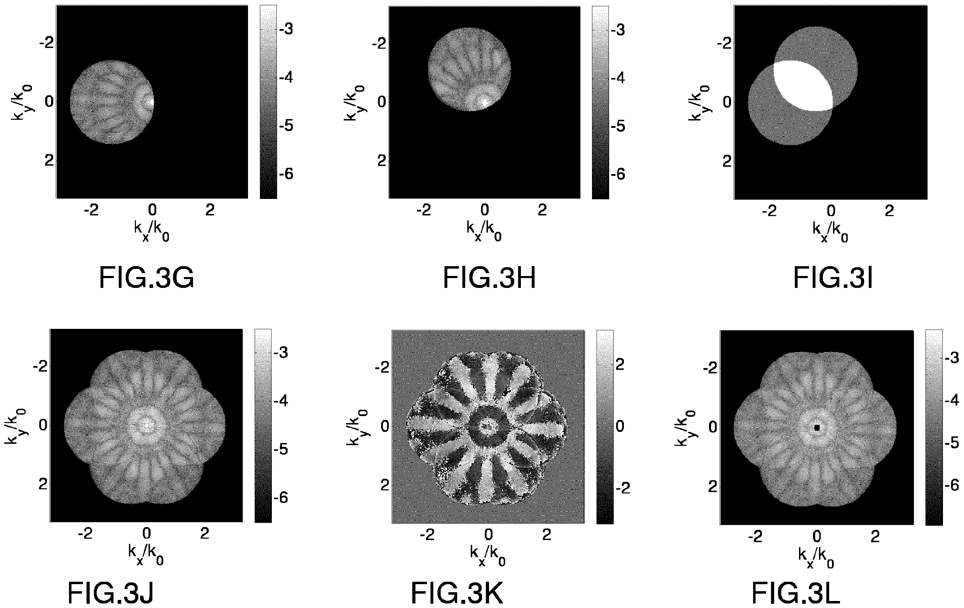

FIGS. 3G and 3H show the modulus of the filtered fields Esi in the Fourier space for the two azimuth angles, after filtering of the signals shown respectively in FIGS. 3E and 3F.

The synthetic aperture could in principle be generated simply by adding the fields shown in FIGS. 3G and 3H for each illumination.

In other words, according to an embodiment, the reconstruction of $r_{eq}$ may simply comprise summing in the Fourier space the retrieved backscattered fields Esi for each illumination angle. The equivalent reflectivity $r_{eq}$ may then be reconstructed in phase and modulus from the 2D inverse Fourier transform of this sum.

However in practice, the different fields Esi may present a phase mismatch from one illumination to another. This originates from the fact that each field Esi is retrieved with a particular constant added on its phase, namely the phase of $E_{Ri}^*$. If the same polar angle is used from one illumination to another, this constant should remain the same, but in practice this may not be perfectly the case, and moreover the phase of $E_{Ri}^*$ may be corrupted by the objective due to aberrations present at the edge of the numerical aperture. Before summing the different fields Esi, it is thus advantageous to normalize them between each other.

This issue can be solved by taking benefit from the spatial frequency overlap between the illuminations. According to Eq. (3) above, two neighbour illumination angles give access to common spatial frequencies of $r_{eq}$, for which the scattered field should be the same in both cases. Thus each illumination is normalized with respect to its neighbour by multiplying its field by a complex factor which minimizes the discrepancy of the data in their common spatial frequency domain (as shown in FIG. 3I for the two fields of FIGS. 3G and 3H). This can be done for instance with standard minimization functions implemented in Matlab®.

Such a normalization procedure may correct the phase mismatch from one illumination beam to another, as well as the modulus mismatch which may arise from intensity fluctuations of the illumination beam from one illumination angle to another.

FIGS. 3J and 3K show the building of the synthetic aperture (modulus and phase) by adding in Fourier space the filtered scattered field for the six illumination angles, with the normalization procedure.

Additional optional treatments in Fourier space can be performed. For example, FIG. 3L shows the modulus of FIG. 3J after deletion of the central specular zone to get a dark field reconstruction. The equivalent reflectivity $r_{eq}$ can then be reconstructed in modulus and phase by doing the 2D inverse Fourier transform of the synthetic aperture.

FIGS. 3M and 3N represent the squared modulus (intensity reflectivity) and the phase of $r_{eq}$, with a clearly improved resolution compared to the approach of F. Jünger *et al.,* obtained by adding the intensities of the scattered fields for each TIR illumination angle (FIG. 3O).

The separation distance between the branches at the center of the star is about 130 nm, clearly below the Rayleigh criterion of about 200 nm imposed by the objective. Our reconstruction technique is presently run in less than five seconds on a standard laptop, but we believe this time can be shortened below one second with program optimization, so the method is compatible with in-vivo imaging.

FIG. 4A shows a further embodiment of a device for TIR microscopy combining the method for TIR microscopy according to the present description and fluorescent measurement (TIRF).

The device $400_A$ shown in FIG. 4A comprises, similarly to the device 200 of FIG. 2A, an illumination path of the sample with a spatially coherent light source 420, an (optional) wave plate 421, scanning means 422, a beam expander 423, a beam splitter 424, a tube lens 425 with a back focal plane 426 and a microscope objective 430 having a back focal plane (or exit pupil) 431, for example an immersion objective, working with a liquid immersion medium 432. The light source 420 is advantageously a laser source, thus having sufficient power and temporal coherence for fluorescence to be detected and filtered from scattering. The device $400_A$ further comprises a first detection path comprising said microscope objective 430, a bidimensional optical acquisition device 440 with a detection plane 445, and optional relay lenses 441, 442 defining a magnifier system with a plane 443 conjugated with the exit pupil 431 of the objective. The device $400_A$ further comprises a computing device 450 configured to receive input data 451 from said acquisition device and perform the numerical treatments for implementing the methods according to the present description.

In the example of FIG. 4A, the device $400_A$ further comprises a second detection path, comprising said microscope objective 430 and a second bidimensional optical acquisition device 460 for acquisition of a fluorescence signal resulting from the fluorescence of the sample. An (optional) optical lens 462 enables an optical conjugation between the interface 211 and a detection plane 465 of said second bidimensional optical acquisition device 460. The computing device 450 is configured to receive input data 452 from said second acquisition device 460.

A beam splitter 461, for example a dichroic beam splitter, is used to separate spectrally the reflected beam $R_1$ and backscattered signal beam $S_1$ on the one hand, and the fluorescence signal $F_1$ on the other hand, such that the reflected beam $R_1$ and backscattered signal beam $S_1$ are directed to the first bidimensional optical acquisition device 440 and the fluorescence signal $F_1$ is directed to the second bidimensional optical acquisition device 460.

Such an arrangement enables to couple the high-resolution reconstruction of the scattering physical parameter of the sample to the characterization of the fluorescence contrast of the object in a single acquisition.

Such characterization of the fluorescence contrast is known and described for example in M. Brunstein et al., Biophysical Journal, Vol. 106, p. 1020, 2014.

According to some further embodiments as shown for example in the device $400_B$ of FIG. 4B, the illumination path may be modified to perform structured illumination total internal reflection fluorescence microscopy (TIRF-SIM), which improves the resolution by a factor 2 compared to classical TIRF microscopy, as explained for example in M. G. L. Gustafsson, Journal of Microscopy, Vol. 198, p. 82, 2000. As shown in FIG. 4B, TIRF-SIM may be performed using a beam shaper element 427 adapted to form simultaneously a first illumination beam $I_1$ and a second illumination beam $I_2$, wherein the first and second illumination beams are symmetric with respect to the optical axis of the device (they have the same polar angle and two azimuth angles spaced by 180°). Such two coherent illumination beams structure the illumination as a light grid on the sample, with dark and bright interferences fringes.

The beam shaper element 427 is for example a diffraction grating which creates diffraction orders +1 and -1. All other orders are blocked and the grating is coupled to a translation mount to shift the light grid successively to different positions so that the entire sample is illuminated with the bright fringes.

With structured illumination, the reconstruction techniques of TIR microscopy according to the present description can still be implemented. In particular, reconstruction techniques directly using the interferograms as described above can be carried out with structured illumination. For extracting the backscattered fields from the interferograms, an adapted spatial filter 444, for example a half-ring spatial filter, may be inserted in the first detection path, as described below.

In the presence of the light grid, the scattered signal in bright field contains the total reflections $E_{R1}e^{i\varphi}$ and $E_{R2}e^{-i\varphi}$ which corresponds to each of the two illuminations, and the two corresponding scattered fields $E_{S1}e^{i\varphi}$ and $E_{S2}e^{-i\varphi}$, where $\varphi$ is a controlled phase shift permitting to adjust the position of the light grid.

To perform self-referenced phase microscopy in these conditions, it is possible to block one of the two total reflections by placing an adapted spatial filter 444 in a plane conjugated with the exit pupil (or back focal plane 431) of the objective (for instance a half-ring placed at the edge of the pupil).

The detected intensity N then becomes:

$$N = |E_{R1}e^{i\varphi}+E_{S1}e^{i\varphi}+E_{S2}e^{-i\varphi}|^2$$

$$N = |E_{R1}|^2+|E_{S1}|^2+|E_{S2}|^2+(E_{S1}+E_{S2}e^{-i2\varphi})E_{R1}{}^*+(E_{S1}{}^*+E_{S2}{}^*e^{i2\varphi})E_{R1}+E_{S1}{}^*E_{S2}e^{-i2\varphi}+E_{S1}E_{S2}{}^*e^{i2\varphi}$$

$$N \approx |E_{R1}|^2+(E_{S1}+E_{S2}e^{-i2\varphi})E_{R1}{}^*+(E_{S1}{}^*+E_{S2}{}^*e^{i2\varphi})E_{R1}$$

Since once again scattered fields are weak compared to the total internal reflection, for a given position of the light grid, it is possible to filter in the 2D Fourier space the sum $(E_{S1} + E_{S2}e^{-i2\varphi})$. By using at least a second position of the grid, fields $E_{S1}$ and $E_{S2}$ can be simply obtained by solving a two unknown equation system. Once these fields have been extracted, the same reconstruction techniques as those explained previously can be applied.

Usually in TIRF-SIM microscopy, three orientations of the light grid are used every 60°, and for each of them the grid is shifted at three positions every third of period, which give 9 measurements in total. The use of a fixed half-ring filter as the spatial filter element 444 is thus a simple solution to block one of the two total reflections for each of the three orientations of the grid.

In the end, adding to a TIRF-SIM apparatus a supplementary detection path to measure the backscattered signal opens the way to simultaneous super-resolved microscopy for both fluorescence and scattering.

More generally, we have shown above that any TIRF microscopy setup can become a phase microscope by detecting the interference between the scattered field and the total internal reflection, as in off-axis holography but without the need of any external reference wave. By using several azimuth illumination angles, it is possible to perform a synthetic aperture reconstruction of the sample, which typically improves the resolution by a factor of 2 compared to classical microscopy techniques plagued by the Rayleigh criterion. Moreover, retrieving both the intensity and the phase of the scattered field permits to study the probed samples with two different image contrasts, which is richer than using intensity only information as conventionally done in non-fluorescent TIR microscopy. With an appropriate model, we believe this can lead to improved estimations of quantitative parameters like axial dimensions and refractive index of the sample, as in tomographic diffractive microscopy (see for example C. Godavarthi et al., JOSA A, Vol. 32, p. 287, 2015).

Although described in a number of exemplary embodiments, the method for TIR microscopy according to the present description and the device for implementing said method comprise various variants, modifications and improvements which will be obvious to those skilled in the art, it being understood that these various variants, modifications and improvements form part of the scope of the invention as defined by the following claims.

**Claims**

1.  A device for TIR microscopy of a sample (S) comprising:

    - a support (210) for receiving the sample;
    - an illumination path of the sample comprising a spatially coherent light source (220) and a microscope objective (230), wherein said illumination path is configured to form at least a first illumination beam ($I_1$) for illuminating an interface (211) between said support and the sample, said first illumination beam having a first azimuth angle ($\phi_1$) and a first polar angle ($\theta_1$) adapted for total internal reflection at said interface, thus forming a first evanescent electromagnetic field ($E_{E1}$) in the sample ;
    - at least a first detection path comprising said microscope objective and a first bidimensional optical acquisition device (240), wherein said first detection path is configured for the acquisition of at least a first interferogram

($N_1$) resulting from the optical interference between at least a first reference electromagnetic field ($E_{R1}$) and at least a first backscattered signal electromagnetic field ($E_{S1}$), wherein said first reference electromagnetic field ($E_{R1}$) results from the total internal reflection of said first illumination beam at said interface and said first backscattered signal electromagnetic field ($E_{S1}$) results from the backscattering by the sample of said first evanescent electromagnetic field ($E_{E1}$); and
- a computing device (250) configured to compute from said at least first interferogram at least one map of a physical parameter related to the sample.

2.  The device for TIR microscopy according to claim 1, wherein said illumination path further comprises scanning means (222) for controlling said azimuth angle and/or said polar angle of at least said first illumination beam.

3.  The device for TIR microscopy according to claim 2, wherein:

    - said scanning means are configured to form a temporal sequence of illumination beams ($I_i$) including said first illumination beam, wherein said illumination beams ($I_i$) have different azimuth and/or polar angles adapted for total internal reflection at said interface, each illumination beam ($I_i$) thus forming an evanescent electromagnetic field ($E_{Ei}$) in the sample;
    - said first detection path is configured for the acquisition of a plurality of interferograms, each interferogram ($N_i$) resulting from the optical interference between at least one reference electromagnetic field ($E_{Ri}$) and at least one backscattered signal electromagnetic field ($E_{Si}$), wherein said reference electromagnetic field results from the total internal reflection of one of said illumination beams at said interface and said backscattered signal electromagnetic field results from the scattering by the sample of an evanescent electromagnetic field formed by said illumination beam;
    - said computing device is configured to compute said at least one map of a physical parameter related to the sample from said plurality of interferograms.

4.  The device for TIR microscopy according to any of the preceding claims, wherein said at least one map of a physical parameter related to the sample comprises at least one of: a 2D map of the phase and/or modulus of said first backscattered signal electromagnetic field, a 2D map of an equivalent reflectivity $r_{eq}$ of the sample, a 3D map of a permittivity contrast $\Delta\varepsilon$ of the sample.

5.  The device for TIR microscopy according to any of the preceding claims, further comprising a second detection path, wherein said second detection path comprises said microscope objective, a second bidimensional optical acquisition device (460) for acquisition of a fluorescence signal resulting from the fluorescence of said sample and a beam splitter (461) configured to direct said fluorescence signal to said second bidimensional optical acquisition device.

6.  The device for TIR microscopy according to claim 5, wherein:

    - said illumination path further comprises a beam shaper element (427) adapted to form simultaneously said first illumination beam ($I_1$) and a second illumination beam ($I_2$), wherein the first and second illumination beams have the same polar angle and two azimuth angles spaced by 180°.

7.  The device for TIR microscopy according to claim 6, wherein:

    - said first acquisition path further comprises a spatial filter (444) for blocking one of the first and second reflections beams ($R_1$, $R_2$), resulting respectively from the total internal reflection of said first and second illumination beams at said interface (211) between the sample and the support.

8.  A method for TIR microscopy of a sample (S) comprising the steps of:

    - illuminating with at least a first illumination beam ($I_1$) an interface (211) between a support (210) and the sample using an illumination path comprising a spatially coherent light source (220) and a microscope objective (230), wherein said first illumination beam has a first polar angle adapted for total internal reflection at said interface and a first azimuth angle, thus forming a first evanescent electromagnetic field ($E_{E1}$) in the sample ;
    - detecting, using a first detection path comprising said microscope objective and a first bidimensional optical acquisition device, at least a first interferogram ($N_1$) resulting from the optical interference between at least a first reference electromagnetic field ($E_{R1}$) and at least a first backscattered signal electromagnetic field ($E_{S1}$),

wherein said first reference electromagnetic field ($E_{R1}$) results from the total internal reflection of said first illumination beam at said interface and the first backscattered signal electromagnetic field ($E_{S1}$) results from the scattering by the sample of said first evanescent electromagnetic field; and
- computing, from at least said first interferogram, at least one map of a physical parameter related to the sample.

9. The method for TIR microscopy according to claim 8, wherein the computing step comprises:

- performing a numerical 2D Fourier transform of said at least first interferogram;
- filtering said 2D Fourier transform to retrieve the 2D Fourier transform of said first backscattered signal electromagnetic field ($E_{S1}$).

10. The method for TIR microscopy according to any of claims 8 and 9, wherein :

- the illuminating step comprises sequentially illuminating said interface with a plurality of illumination beams ($I_i$) including said first illumination beam, and having different azimuth and/or angles adapted for total internal reflection at said interface, each illumination beam ($I_i$) thus forming an evanescent electromagnetic field ($E_{Ei}$) in the sample;
- the detecting step comprises acquiring a plurality of interferograms ($N_i$), each interferogram resulting from the optical interference between at least one reference electromagnetic field ($E_{Ri}$) and at least one backscattered signal electromagnetic field ($E_{Si}$), wherein said reference electromagnetic field ($E_{Ri}$) results from the total internal reflection of one of said illumination beams at said interface and said backscattered signal electromagnetic field results from the scattering by the sample of an evanescent electromagnetic field formed by said illumination beam in the sample;
- the computing step comprises computing, from said plurality of interferograms, at least one a map of a physical parameter related to the sample.

11. The method for TIR microscopy according to claim 10, wherein the computing step comprises performing a summation of said plurality of interferograms.

12. The method according to claim 10, wherein the computing step comprises:

- performing a numerical 2D Fourier transform of each interferogram ($N_i$);
- filtering said 2D Fourier transform to retrieve the 2D Fourier transform of the backscattered signal electromagnetic field ($E_{Si}$) for each illumination angle;
- summing said 2D Fourier transforms of the backscattered signal electromagnetic field ($E_{Si}$) for all illumination angle;
- performing an inverse 2D Fourier transform of said sum to obtain a 2D map of the phase and/or modulus of an equivalent reflectivity of the sample.

13. The method for TIR microscopy according to any of claims 8 to 12, further comprising acquiring using a second detection path, a fluorescence signal resulting from the fluorescence of the sample.

14. The method for TIR microscopy according to claim 13, wherein:

- the illuminating step comprises simultaneously illuminating said interface with said first illumination beam and a second illumination beam, wherein the first and second illumination beams have the same polar angle and two azimuth angles spaced by 180°.

15. The method for TIR microscopy according to claim 14, wherein:

- the detecting step further comprises blocking one of the first and second reflections beams ($R_1$, $R_2$), resulting respectively from the total internal reflection of said first and second illumination beams at said interface (211) between the sample and the support.

PRIOR ART

FIG.1

FIG.2A

FIG.2B

FIG.2C

EP 3 502 665 A1

FIG.3A

FIG.3B

FIG.3C

FIG.3D

FIG.3E

FIG.3F

EP 3 502 665 A1

FIG.3G  FIG.3H  FIG.3I

FIG.3J  FIG.3K  FIG.3L

FIG.3O

FIG.3N

FIG.3M

FIG.4A

EP 3 502 665 A1

FIG.4B

Europäisches
Patentamt

European
Patent Office

Office européen
des brevets

# EUROPEAN SEARCH REPORT

Application Number

EP 17 30 6916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEJANDRO CALABUIG ET AL: "Common-path configuration in total internal reflection digital holography microscopy", OPTICS LETTERS, OPTICAL SOCIETY OF AMERICA, vol. 39, no. 8, 15 April 2014 (2014-04-15), pages 2471-2474, XP001588137, ISSN: 0146-9592, DOI: 10.1364/OL.39.002471 [retrieved on 2014-04-14] | 1,8 | INV. G01N21/45 G01N21/552 |
| Y | * the whole document * | 2-7,9-15 | |
| Y,D | MAIA BRUNSTEIN ET AL: "Eliminating Unwanted Far-Field Excitation in Objective-Type TIRF. Part I. Identifying Sources of Nonevanescent Excitation Light", BIOPHYSICAL JOURNAL, vol. 106, no. 5, 1 March 2014 (2014-03-01), pages 1020-1032, XP055449652, AMSTERDAM, NL ISSN: 0006-3495, DOI: 10.1016/j.bpj.2013.12.049 * page 1020 - page 1022 * | 2-7,9-15 | |
| A | US 7 880 891 B1 (KIM MYUNG K [US]) 1 February 2011 (2011-02-01) * abstract; figures 1-2 * | 1-15 | TECHNICAL FIELDS SEARCHED (IPC) G01N |
| A | JIWEI ZHANG ET AL: "Compact surface plasmon holographic microscopy for near-field film mapping", OPTICS LETTERS, vol. 42, no. 17, 1 September 2017 (2017-09-01), page 3462, XP055470599, ISSN: 0146-9592, DOI: 10.1364/OL.42.003462 * the whole document * | 1-15 | |

-/--

The present search report has been drawn up for all claims

| Place of search | Date of completion of the search | Examiner |
|---|---|---|
| Munich | 25 April 2018 | Pisani, Francesca |

EPO FORM 1503 03.82 (P04C01)

Europäisches
Patentamt

European
Patent Office

Office européen
des brevets

**EUROPEAN SEARCH REPORT**

Application Number

EP 17 30 6916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/023472 A1 (PAVILLON NICOLAS [CH] ET AL) 26 January 2017 (2017-01-26) * abstract * * paragraph [0021] * | 1-15 | |

TECHNICAL FIELDS
SEARCHED      (IPC)

The present search report has been drawn up for all claims

| Place of search | Date of completion of the search | Examiner |
|---|---|---|
| Munich | 25 April 2018 | Pisani, Francesca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 30 6916

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2018

| Patent document cited in search report | | Publication date | Patent family member(s) | | Publication date |
|---|---|---|---|---|---|
| US 7880891 | B1 | 01-02-2011 | US | 7812959 B1 | 12-10-2010 |
| | | | US | 7880891 B1 | 01-02-2011 |
| US 2017023472 | A1 | 26-01-2017 | EP | 2736403 A1 | 04-06-2014 |
| | | | US | 2014347672 A1 | 27-11-2014 |
| | | | US | 2017023472 A1 | 26-01-2017 |
| | | | WO | 2013018024 A1 | 07-02-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. AXELROD et al.** Cell-substrate contacts illuminated by total internal reflection fluorescence. *The Journal of cell biolology,* 1981, vol. 89, 141
- **P. BON et al.** Label-free evanescent microscopy for membrane nano-tomography in living cells. *Journal of Biophotonics,* 2014, vol. 7, 857
- **F. JÜNGER et al.** Fast, label-free super-resolution live-cell imaging using rotating coherent scattering (ROCS) microscopy. *Scientific reports,* vol. 6, 30393
- **C. GODAVARTHI et al.** *JOSA A,* 2015, vol. 32, 287
- **Y. COTTE et al.** *Nature Photonics,* 2013, vol. 7, 113
- **S. A. ALEXANDROV et al.** *Phys. Rev. Lett.,* 2006, vol. 97, 168102
- **M. D'URSO et al.** *JOSA A,* 2008, vol. 25, 271
- **M. BRUNSTEIN et al.** *Biophysical Journal,* 2014, vol. 106, 1020
- **M. G. L. GUSTAFSSON.** *Journal of Microscopy,* 2000, vol. 198, 82